# EUROPÄISCHE PATENTANMELDUNG

(11) **EP 3 540 406 A1**
(43) Veröffentlichungstag der Anmeldung: **18.09.2019**
(21) Anmeldenummer: 18161189.8
(22) Anmeldetag: 12.03.2018
(51) Int. Cl.: G01N 1/22, F01D 17/02

(54) **EMISSIONSLANZE**

(71) Anmelder: Siemens Aktiengesellschaft, 80333 München (DE)
(72) Erfinder: Chlebowski, Matthias, 45468 Mülheim a. d. Ruhr (DE); Deiss, Olga, 40627 Düsseldorf (DE); Timmermann, Julian, 45130 Essen (DE); van der Lest, Niclas, 45147 Essen (DE)

(57) **Zusammenfassung**

Emissionslanze (2) zur Entnahme von Abgas einer Brennkammer, umfassend einen rohrförmigen Körper (4) mit einem im Betrieb heißen Ende (6) und einem im Betrieb kalten Ende (8), eine Vielzahl von Entnahmedurchführungen (14a, 14b, 14c) durch den rohrförmigen Körper (4), die in einer Längsrichtung des rohrförmigen Körpers (4) verlaufen, wobei die Entnahmedurchführungen (14a, 14b, 14c) auf unterschiedlicher Höhe in Längsrichtung jeweils einen Emissionseinlass (12) aufweisen und am kalten Ende (8) jeweils einen Emissionsauslass (16) aufweisen, wobei oberhalb der Emissionseinlässe (12) im Bereich des kalten Endes (8) des rohrförmigen Körpers (4) ein Wassereinlass (20) und ein Wasserauslass (22) für Kühlwasser vorgesehen sind, wobei im rohrförmigen Körper (4) ein Kühlkanal (28) ausgebildet ist, wobei ein erster Teil (28a) des Kühlkanals (28) sich vom Wassereinlass (20) zum heißen Ende des rohrförmigen Körpers (4) erstreckt und ein zweiter Teil (28b) des Kühlkanals (28) sich vom heißen Ende (6) zum Wasserauslass (22) erstreckt, wobei der erste Teil (28a) und der zweite Teil (28b) vom Kühlkanal (28) durch eine Trennwand (32) getrennt sind, in der die Entnahmedurchführungen (14a, 14b, 14c) verlaufen. Durch die verbesserte Geometrie der Emissionslanze (2) ist eine effiziente Kühlung möglich.

## Beschreibung

Die vorliegende Erfindung bezieht sich auf eine Emissionslanze, auf ein Herstellungsverfahren für eine solche Emissionslanze sowie auf eine Verwendung einer Emissionslanze.

Vor der Einführung neuer Gasturbinen müssen diese getestet und validiert werden. Da der Brenner innerhalb der Anlage ein kritisches Bauteil darstellt, sind vor allem Verbrennungstests sehr bedeutsam. Hier stehen insbesondere Thermoakustik, Verbrennungsstabilisation und Emissionen im Vordergrund. Um jedoch nur die Brennereinheit zu testen, muss kein kompletter Gasturbinenprototyp gebaut werden, sondern es reicht einen Teilausschnitt einer Gasturbine zu simulieren und dabei einen einzelnen Brenner zu testen. Bei solchen Tests werden Emissionslanzen in eine so genannte Vane Simulation Section gesteckt, welche einen Teil des Heißgasmassenstroms in Messgeräte lenken, um Kohlenmonoxid- und Stickoxidanteile im Heißgas zu messen und um Vorhersagen zur späteren Flotte erstellen zu können.

Aktuell werden die Emissionslanzen konventionell hergestellt, beispielsweise indem in ein Metallrohr Bohrungen gefertigt werden, durch welche später das Heißgas abgesaugt wird. In diese Bohrungen werden kleine Röhrchen gesteckt, welche die Emissionen zum Auslass an einem im Betrieb kalten Ende der Emissionslanze transportieren. Um die Einlässe für das Heißgas wasserdicht zu gestalten, müssen die Röhrchen eingeschweißt werden. Da die Temperaturen an der Messstelle sehr hoch sind, ist es erforderlich die Lanzen durchgängig mit Wasser zu kühlen.

Aus der EP 0 689 043 A2 ist eine weitere Emissionssonde bekannt, die ein einstückiges Sondenrohr, welches in seinem Inneren einen einzigen, in Richtung der Rohrachse verlaufenden Emissionskanal sowie zwei parallel zum Emissionskanal und nebeneinander verlaufende Kühlkanäle aufweist. Die Kühlkanäle, im Querschnitt gesehen, schließen den Emissionskanal zumindest teilweise ein und füllen das Innere des Sondenrohres soweit aus, dass zwischen den Kühlkanälen und dem das Sondenrohr umgebenden Außenraum eine Rohrwand mit einer annähernd gleichbleibenden Wandstärke vorhanden ist. Dabei ist eine Vielzahl von Kühlrippen vorgesehen, welche aus der Rohrwand heraus in das Innere der Kühlkanäle ragen.

Der Erfindung liegt die Aufgabe zugrunde, eine gegenüber dem Stand der Technik verbesserte Geometrie der Emissionslanze zu ermöglichen, die insbesondere in eine effiziente Kühlung resultiert.

Der Erfindung liegt weiterhin die Aufgabe zugrunde, eine solche Emissionslanze herzustellen.

Schließlich liegt der Erfindung die Aufgabe zugrunde, eine solche Emissionslanze auf geeignete Weise einzusetzen.

Die erste Aufgabe wird erfindungsgemäß gelöst durch eine Emissionslanze zur Entnahme von Abgas einer Brennkammer, umfassend einen rohrförmigen Körper mit einem im Betrieb heißen Ende und einem im Betrieb kalten Ende, eine Vielzahl von Entnahmedurchführungen durch den rohrförmigen Körper, die in einer Längsrichtung des rohrförmigen Körpers verlaufen, wobei die Entnahmedurchführungen auf unterschiedlicher Höhe in Längsrichtung jeweils einen Emissionseinlass aufweisen und am kalten Ende jeweils einen Emissionsauslass aufweisen, wobei oberhalb der Emissionseinlässe im Bereich des kalten Endes des rohrförmigen Körpers ein Wassereinlass und ein Wasserauslass für Kühlwasser vorgesehen sind, wobei im rohrförmigen Körper ein Kühlkanal ausgebildet ist, wobei ein erster Teil des Kühlkanals sich vom Wassereinlass zum heißen Ende des rohrförmigen Körpers erstreckt und ein zweiter Teil des Kühlkanals sich vom heißen Ende zum Wasserauslass erstreckt, wobei der erste Teil und der zweite Teil vom Kühlkanal durch eine Trennwand getrennt sind, in der die Entnahmedurchführungen verlaufen.

Gemäß der zweiten Aufgabe wird der rohrförmige Körper durch ein generatives Fertigungsverfahren hergestellt, insbesondere durch Elektronenstrahlschmelzen oder selektives Laserschmelzen. Die neue Lanzengeometrie wird dabei mithilfe von einem additiven Herstellungsverfahren (engl. Additive Manufacturing), also einem 3D-Druckverfahren, gefertigt werden. Das grundlegende Prinzip der Emissionslanze wird dabei nicht verändert, jedoch werden konstruktive Änderungen durchgeführt werden, um weiterhin die Eigenschaften der Emissionslanze zu erhalten und zugleich weitere Vorteile zu schaffen.

Die dritte Aufgabe wird erfindungsgemäß gelöst durch eine Verwendung einer solchen Emissionslanze zum Konzipieren einer Brennkammer, insbesondere einer Gasturbine.

Die erfindungsgemäße Emissionslanze zeichnet sich durch einen besonders filigranen Innenaufbau aus, durch welchen eine besonders effiziente Kühlung des rohrförmigen Körpers ermöglicht wird. Entscheidend hierfür ist das Design der Trennwand. Die Trennwand übernimmt zum einen die Trennung vom Wasserzulauf zum Wasserablauf, zum anderen streckt sich eine Vielzahl an Entnahmedurchführungen durch die Trennwand. Die Emissionslanze hat mehrere Einlässe für die Emissionsabsaugung und diese werden innerhalb der Trennwand in einen Auslass am kalten Ende der Emissionslanze geführt. Die Trennwand ist deshalb so ausgelegt, dass sie zum einen breit genug ist, damit sie die Vielzahl an Entnahmedurchführungen aufnehmen kann, zum anderen ist sie nicht allzu stark, damit ein möglichst großes Volumen für die Kühlkanäle zur Verfügung steht. Die Trennwand ist hierbei insbesondere einige Millimeter stark. Zweckdienlicherweise ist beidseitig der Entnahmedurchführungen die Wanddicke größer als der Druchmesser der Entnahmedurchführungen. Die den Kühlkanal begrenzenden Wände weisen insbesondere keine Rippen auf, welche das Volumen des Kühlkanals verringern würden.

Die Trennwand ist bezüglich der Längsachse des rohrförmigen Körpers verdreht ausgeführt. Durch die verdrehte innere Wand ist der Anschluss der Wasserschläuche oberhalb der Entnahmedurchführungen möglich. Durch die additive Herstellung ist es möglich, die Trennwand, welche das Heißgas transportiert und den Wasserzu- und -ablauf trennt, zu verdrehen. Die verdrehte Wand wirkt bei unterschiedlicher Ausdehnung der Außenwand des rohrförmigen Körpers zu den inneren Geometrien wie eine Feder. Insbesondere werden dadurch thermisch bedingte Spannungen im Material des rohrförmigen Körpers reduziert.

Das erfindungsgemäße Design der Emissionslanze hat zudem den Vorteil, dass sie ohne bauliche Veränderungen um 180° gedreht eingebaut werden kann. Auch kann Vor- und Rücklauf problemlos getauscht werden, was die Konstruktion flexibler und weniger fehleranfällig macht.

Die Emissionen werden durch die bereits mitgedruckten Entnahmedurchführungen bis an die Anschlüsse am im Betrieb kalten Ende der Emissionslanze geführt, an welcher Stelle Standardanschlüsse aufgeschraubt werden. Die Anschlüsse sind so angeordnet, dass alle Adapter ohne Probleme angeschraubt werden können. Durch das Konzept ist keine weitere Bearbeitung erforderlich, da die Adapter (z.B. Swagelok Adapter) einfache Rohrverbinder sind und kein Gewinde etc. benötigen.

Darüber hinaus sind ein Wassereinlass und ein Wasserauslass vorhanden, die im Bereich des kalten Endes des rohrförmigen Körpers angeordnet sind und zwischen denen das Kühlwasser im Kühlkanal verläuft. Im ersten Teil des Kühlkanals strömt das Kühlwasser vom Wassereinlass zum heißen Ende des rohrförmigen Körpers, dort wird es umgelenkt, ändert seine Richtung und strömt dann in der Gegenrichtung zum Wasserauslass.

Der Wassereinlass und der Wasserauslass werden insbesondere nach dem Druck des rohrförmigen Körpers zunächst gebohrt und anschließend werden Wasseranschlüsse angeschweißt, um den Anschlusskomfort von Schraubverbindungen weiterhin zu erhalten.

Zweckdienlicherweise wird ein Anschlussflansch am rohrförmigen Körper, über den die Emissionslanze mit einem gasführenden Bauteil verbunden, insbesondere verschraubt wird, ebenfalls durch das generative Fertigungsverfahren hergestellt, wodurch die Lebensdauer der Emissionslanze signifikant gesteigert wird.

Bevorzugt ist die Trennwand zwischen dem Wassereinlass und dem heißen Ende um 90° verdreht, d.h. dass ihr Querschnitt im Bereich des heißen Endes senkrecht ausgerichtet ist zu ihrem Querschnitt im Bereich auf der Höhe des Wassereinlasses. Jedoch sind auch andere Ausführungen bezüglich der Verdrehung der Trennwand denkbar, z.B. eine Drehung kleiner als 90°, eine Drehung um 180° oder auch mehrere Drehungen in Längsrichtung der Trennwand zwischen dem heißen Ende und dem kalten Ende des rohrförmigen Körpers.

Gemäß einer weiteren bevorzugten Ausgestaltung ist der rohrförmige Körper einteilig ausgebildet. Die Herstellung der Emissionslanze ist dadurch einfach und schnell, denn die meisten Komponenten sind Teil des rohrförmigen Körpers und entstehen somit bei seiner Herstellung. Es sind in einem weiteren Schritt sehr wenige Komponenten zusätzlich am rohrförmigen Körper anzubringen.

Im Hinblick auf einen besonders guten Durchfluss durch die Entnahmedurchführungen weist zumindest eine der Entnahmedurchführungen einen kreisförmigen Querschnitt auf. Auch herstellungstechnisch ist die Ausbildung eines kreisförmigen Querschnitts am einfachsten. Grundsätzlich sind jedoch auch andere Geometrien denkbar, z.B. mit einem tropfenförmiger Querschnitt.

Vorzugsweise sind der Wassereinlass und der Wasserauslass auf gleicher Höhe diametral gegenüberliegend angeordnet. Die symmetrische Anordnung des Wassereinlasses und des Wasserauslasses in Bezug auf eine Mittelachse des rohrförmigen Körpers ermöglicht eine gleichmäßige Verteilung des Kühlwassers im Inneren der Emissionslanze, wodurch die Wasserkühlung besonders effizient ist.

Gemäß einer ersten bevorzugten Ausführungsvariante weist die Trennwand zur Mitte hin eine kleinere Wandstärke auf. Durch den 3D-Druck ist eine solche variable Wandstärke möglich, auch in Kombination mit der gedrehten Form der Trennwand. Da die höchsten Spannungen zwischen der Trennwand und der Außenwand auftreten, ist eine Verstärkung der Trennwand in diesem Bereich aus Stabilitätsgründen besonders vorteilhaft. Durch die konkave Ausprägung der Trennwand kann zudem die Eigenschwingung des rohrförmigen Körpers und der Trennwand manipuliert werden.

Gemäß einer zweiten bevorzugten Ausführungsvariante liegen die Emissionseinlässe, in Längsrichtung betrachtet, etwa auf einer Linie auf einer Entnahmeseite des rohrförmigen Körpers und die Trennwand ist lediglich an der Entnahmeseite mit einer Außenwand des rohrförmigen Körpers verbunden. Dies bedeutet, dass an der der Entnahmeseite gegenüberliegenden Seite ein Schlitz zwischen der Außenwand des rohrförmigen Körpers der Trennwand vorgesehen ist. Die das Heißgas führende Trennwand ist nur noch an der Entnahmeseite befestigt und nicht auf der gegenüberliegenden Seite, wodurch sie sich mit der Außenwand mit bewegen und ausdehnen kann, ohne dass dies zu großen Spannungen im Material führt. Hier wirkt die verdrehte Trennwand wie eine Feder.

Gemäß einer dritten bevorzugten Ausführungsvariante schließt die Trennwand mit dem Wassereinlass sowie mit dem Wasserauslass einen Winkel kleiner 45°, insbesondere kleiner 30°. Der wesentliche Vorteil dieser Variante besteht darin, dass die Geometrien einfacher sind und sich auch das Metallpulver nach dem Drucken des rohrförmigen Körpers einfacher ausblasen und hinaus drücken lässt.

Vorteilhafterweise werden nach der Herstellung des rohrförmigen Körpers der erste Wasseranschluss an dem Wassereinlass und der zweite Wasseranschluss an dem Wasserauslass des rohrförmigen Körpers angeschweißt, um den Anschlusskomfort von Schraubverbindungen weiterhin zu erhalten.

Ausführungsbeispiele der Erfindung werden anhand einer Zeichnung näher erläutert. Hierin zeigen:
- FIG 1: einen Längsschnitt durch eine Emissionslanze,
- FIG 2: einen Längsschnitt durch die Emissionslanze entlang der Linie II-II in FIG 1,
- FIG 3: schematisch einen Querschnitt durch die Emissionslanze entlang der Linie III-III in FIG 1 mit einer ersten Ausführungsvariante einer Trennwand,
- FIG 4: im Querschnitt schematisch eine zweite Ausführungsvariante der Trennwand,
- FIG 5: im Querschnitt schematisch eine dritte Ausführungsvariante der Trennwand, und
- FIG 6: im Querschnitt schematisch eine vierte Ausführungsvariante der Trennwand.

Gleiche Bezugszeichen haben in den Figuren die gleiche Bedeutung.

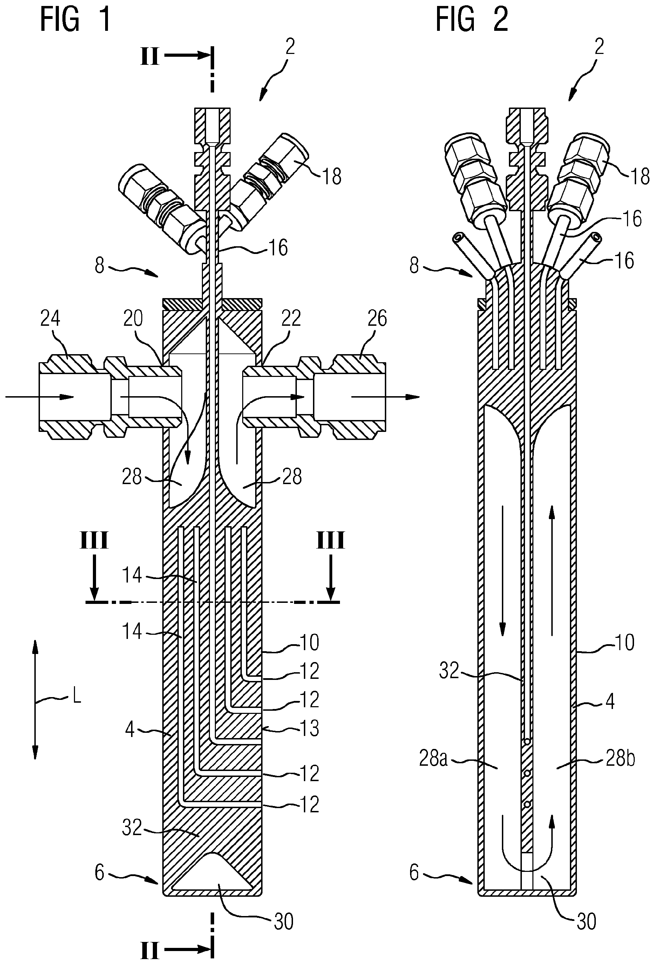

Aus FIG 1 und FIG 2 ist der Aufbau einer Emissionslanze 2 ersichtlich, die einen rohrförmigen Körper 4 mit einem im Betrieb heißen Ende 6, welches einem Heißgas ausgesetzt ist, und einem im Betrieb kalten Ende 8, an welchem Messgeräte angeschlossen sind. Eine Außenwand 10 des rohrförmigen Körpers 4 ist mit mehreren Emissionseinlässen 12 versehen, die in einer Längsrichtung L etwa auf einer Linie liegen und eine Entnahmeseite 13 definieren. Die Emissionseinlässe 12 sind Teil einer Vielzahl von Entnahmedurchführungen 14 durch den rohrförmigen Körper, die in Längsrichtung L des rohrförmigen Körpers 4 verlaufen. Am kalten Ende 8 weisen die Entnahmedurchführungen 14 jeweils einen Emissionsauslass 16 auf, an dem ein Adapter 18, z.B. Swagelok-Adapter, angeschlossen ist.

Oberhalb der Emissionseinlässe 12 im Bereich des kalten Endes 8 des rohrförmigen Körpers 4 sind ein Wassereinlass 20 und ein Wasserauslass 22 für Kühlwasser, das durch Pfeile angedeutet ist, vorgesehen. Der Wassereinlass 20 und der Wasserauslass 22 sind diametral gegenüberliegend auf der gleichen Höhe angeordnet. Der Wassereinlass 20 und der Wasserauslass 22 stellen Bohrungen dar, in die ein erster Wasseranschluss 24 bzw. ein zweiter Wasseranschluss 26 eingebaut sind, insbesondere durch Schweißen. Zwischen dem Wassereinlass 20 und dem Wasserauslass 22 ist im rohrförmigen Körper 4 ein Kühlkanal 28 ausgebildet ist. Ein erster Teil 28a des Kühlkanals 28 erstreckt sich vom Wassereinlass 20 zum heißen Ende 6 des rohrförmigen Körpers 4. Im Bereich des heißen Endes 6 ist im rohrförmigen Körper 4 ein Übertrittsraum 30 gebildet, in dem das Kühlwasser im Betrieb der Emissionslanze 2 umgelenkt wird und anschließend in der Gegenrichtung entlang eines zweiten Teils 28b des Kühlkanals 28 zum Wasserauslass 22 strömt.

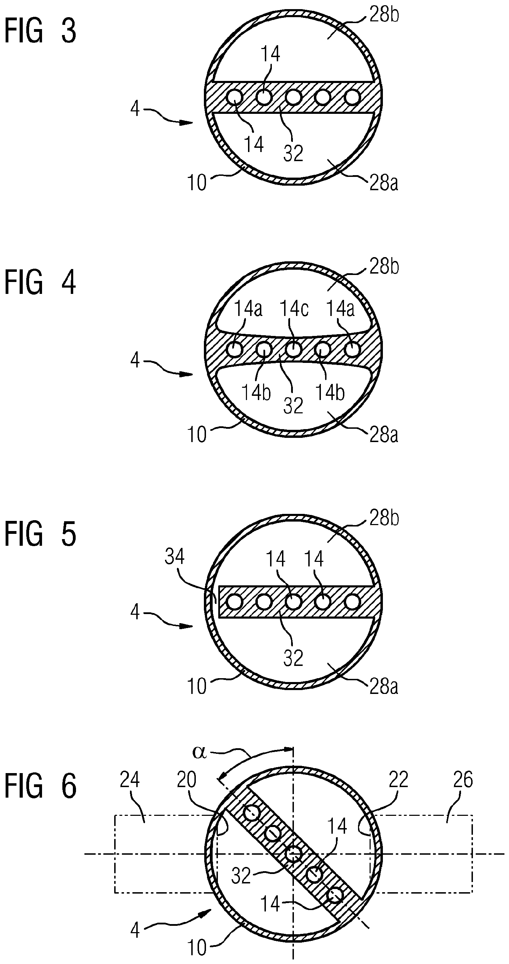

Eine Trennwand 32 trennt den ersten Teil 28a und den zweiten Teil 28b vom Kühlkanal 28, wobei die Entnahmedurchführungen 14 parallel zueinander innerhalb der Trennwand 32 verlaufen. Die Anordnung der Entnahmedurchführungen 14 ist der Querschnittsdarstellung in FIG 3 gezeigt. Die Entnahmedurchführungen 14 haben beispielsweise einen Durchmesser von 1 mm, im Bereich der Entnahmedurchführungen 14 ist die Trennwand 32 insbesondere doppel so dick wie der Druchmesser der Entnahmedurchführungen 14 ist, somit ist die Trennwand 32 in diesem Ausführungsbeispiel insgesamt 5 mm stark.

Im Ausführungsbeispiel gemäß FIG 1 und FIG 2 ist die Trennwand 32 bezüglich der Längsachse des rohrförmigen Körpers verdreht ausgeführt. Die dargestellte Trennwand 32 ist zwischen dem Wassereinlass 20 und dem heißen Ende 6 um 90° verdreht, d.h. dass ihr Querschnitt im Bereich des heißen Endes 6 senkrecht ausgerichtet ist zu ihrem Querschnitt auf der Höhe der Wasseranschlüsse 24, 26. Die Drehung befindet sich dabei im Bereich der Wasseranschlüsse 24, 26, danach bildet die Trennwand 32 bis zum Übertrittsraum 30 eine plane, nichtgekrümmte Fläche.

Der rohrförmige Körper 4 wird mittels Additive Manufacturing hergestellt, wodurch die oben beschriebenen Geometrien und Ausführungen der Trennwand 32 mit den Entnahmedurchführungen 14 erst möglich sind. Auch ein hier nicht näher gezeigter Anschlussflansch, über den die Emissionslanze 2 an ihrem Einsatzort an einem Bauteil befestigt wird, wird in einem Herstellungsvorgang mit dem rohrförmigen Körper 4 mittels Additive Manufacturing hergestellt.

Aus FIG 4 geht eine weitere Ausführung der Trennwand 32 hervor. Die Trennwand 32 weist zur Mitte hin eine immer kleinere Wandstärke auf, bzw. die Trennwand 32 ist im Bereich ihrer Verbindung zur Außenwand 10 verstärkt

Beim dritten Ausführungsbeispiel gemäß FIG 5 ist die Trennwand 32 lediglich an der Entnahmeseite 13 des rohrförmigen Körpers 4 mit der Außenwand 10 verbunden. An der der Entnahmeseite 13 gegenüberliegenden Seite ist ein Schlitz 34 ausgebildet. Der Schlitz 34 darf nicht zu groß dimensioniert sein, damit möglichst wenig Kühlwasser zwischen die beiden Teile 28a, 28b des Kühlkanals 28 übertreten kann.

Die Trennwand 32 gemäß FIG 6 weist die gleiche Ausgestaltung wie die gemäß FIG 3 auf, jedoch ist ihre Anordnung bzw. Ausrichtung innerhalb des rohrförmigen Körpers 4 eine andere. Die Trennwand 32 in FIG 6 schließt dem Wassereinlass 20 bzw. dem ersten Wasseranschluss 24 sowie mit dem Wasserauslass 22 bzw. dem zweiten Wasseranschluss 26 einen Winkel α von ca. 45°.

Der Gegenstand der Erfindung ist nicht nur auf die in der Zeichnung dargestellten Ausführungen eingeschränkt. Beispielsweise ist auch denkbar, weiterhin eine gedrehte Trennwand 32 vorzusehen, die jedoch nicht um 90° gedreht ist, sondern um einen anderen Winkel. Dadurch können Kühlungsvorteile entstehen, wenn z.B. mehr als eine Umdrehung vorliegt, denn es alle Seiten der Emissionslanze 4 gleichmäßiger gekühlt. Auch ist es möglich, das Heißgas in den Entnahmedurchführungen 14 nicht genau mit oder genau gegen die Strömung abzuführen, sondern sogar in jedem gewünschtem Winkel, je nachdem wie weit die innere Trennwand 32 gedreht ausgeführt wird.

Der Einsatz der Emissionslanze 2 ist durch minimale Anpassungen des Designs auch in anderen Bereichen der Heißgasanalyse denkbar. So kann z.B. auch durch den mittleren Kanal eine Videolanze durchgeführt werden, welche die Flamme im Brenner beobachtet. Hierzu müsste lediglich der Kopf der Sonde umkonstruiert werden oder bereits existierende Köpfe an diese Lanze angepasst werden.

## Patentansprüche

1. Emissionslanze (2) zur Entnahme von Abgas einer Brennkammer,
umfassend einen rohrförmigen Körper (4) mit einem im Betrieb heißen Ende (6) und einem im Betrieb kalten Ende (8),
eine Vielzahl von Entnahmedurchführungen (14a, 14b, 14c) durch den rohrförmigen Körper (4), die in einer Längsrichtung des rohrförmigen Körpers (4) verlaufen, wobei die Entnahmedurchführungen(14a, 14b, 14c) auf unterschiedlicher Höhe in Längsrichtung jeweils einen Emissionseinlass (12) aufweisen und am kalten Ende (8) jeweils einen Emissionsauslass (16) aufweisen,
wobei oberhalb der Emissionseinlässe (16) im Bereich des kalten Endes (8) des rohrförmigen Körpers (4) ein Wassereinlass (20) und ein Wasserauslass (22) für Kühlwasser vorgesehen sind,
wobei im rohrförmigen Körper (4) ein Kühlkanal (28) ausgebildet ist, wobei ein erster Teil (28a) des Kühlkanals (28) sich vom Wassereinlass zum heißen Ende (6) des rohrförmigen Körpers (4) erstreckt und ein zweiter Teil (28b) des Kühlkanals (28) sich vom heißen Ende (6) zum Wasserauslass (22) erstreckt,
wobei der erste Teil (28a) und der zweite Teil (28b) vom Kühlkanal (28) durch eine Trennwand (32) getrennt sind, in der die Entnahmedurchführungen (14a, 14 b, 14c) verlaufen,
wobei die Trennwand (32) bezüglich der Längsachse (L) des rohrförmigen Körpers (4) verdreht ausgeführt ist.

2. Emissionslanze (2) nach Anspruch 1,
wobei die Trennwand (32) zwischen dem Wassereinlass (20) und dem heißen Ende (6) um 90° verdreht ist.

3. Emissionslanze (2) nach einem der vorhergehenden Ansprüche,
wobei der rohrförmige Körper (4) einteilig ausgebildet ist.

4. Emissionslanze (2) nach einem der vorhergehenden Ansprüche,
wobei zumindest eine der Entnahmedurchführungen (14a, 14b, 14c) einen kreisförmigen Querschnitt aufweist.

5. Emissionslanze (2) nach einem der vorhergehenden Ansprüche,
wobei der Wassereinlass (20) und der Wasserauslass (22) auf gleicher Höhe diametral gegenüberliegend angeordnet sind.

6. Emissionslanze (2) nach einem der vorhergehenden Ansprüche,
wobei die Trennwand (32) zur Mitte hin eine kleinere Wandstärke aufweist.

7. Emissionslanze (2) nach einem der vorhergehenden Ansprüche,
wobei die Emissionseinlässe (12) in Längsrichtung betrachtet etwa auf einer Linie auf einer Entnahmeseite (13) des rohrförmigen Körpers (4) liegen und die Trennwand (32) lediglich an der Entnahmeseite (13) mit einer Außenwand (10) des rohrförmigen Körpers (4) verbunden ist.

8. Emissionslanze nach einem der vorhergehenden Ansprüche, wobei die Trennwand (32) mit dem Wassereinlass (20) sowie mit dem Wasserauslass (22) einen Winkel (α) kleiner 45°, insbesondere kleiner 30° schließt.

9. Verfahren zur Herstellung einer Emissionslanze (2) nach einem der vorhergehenden Ansprüche, wobei der rohrförmige Körper (4) durch ein generatives Fertigungsverfahren hergestellt wird.

10. Verfahren nach Anspruch 9,
wobei der erste Wasseranschluss (24) an dem Wassereinlass (20) und der zweite Wasseranschluss (26) an dem Wasserauslass (22) des rohrförmigen Körpers (4) angeschweißt wird.

11. Verfahren nach Anspruch 9 oder 10,
wobei ein Anschlussflansch am rohrförmigen Körper (4) ebenfalls durch das generative Fertigungsverfahren hergestellt wird.

12. Verwendung einer Emissionslanze (2) nach einem der Ansprüche 1 bis 8 zum Konzipieren einer Brennkammer.
